# DEMANDE DE BREVET EUROPEEN

(11) **EP 1 314 377 A2**
(43) Date de publication de la demande: **28.05.2003**
(21) Numéro de dépôt: 02370051.1
(22) Date de dépôt: 22.11.2002
(51) Int. Cl.: A47B 57/48

(54) **Taquet support de rayon ou tablette**

(30) Priorité: 23.11.2001 FR 0115205
(71) Demandeur: Duwicquet, Arnaud, 62123 Montenescourt (FR); Duwicquet, Franck, 62173 Ransart (FR)
(72) Inventeur: Duwicquet, Arnaud, 62123 Montenescourt (FR); Duwicquet, Franck, 62173 Ransart (FR)
(74) Mandataire: Hennion, Jean-Claude

(57) **Abrégé**

Etagère comprenant au moins un montant (5) et un taquet (1) support de tablette, caractérisé en ce que le montant (5) est pourvu d'au moins un trou traversant (6), le taquet (1) étant pourvu d'au moins deux gorges (7), chacune de ces gorges (7) étant apte à venir en appui sur le bord des deux ouvertures opposées du trou traversant (6) du montant (5), lorsque le taquet (1) est en position montée.

## Description

L'invention se rapporte au domaine technique des étagères et rayonnages.

L'invention concerne plus particulièrement une étagère pourvue d'un nouveau taquet support de rayon ou tablette.

On connaît déjà, dans l'art antérieur, une grande variété de structures de tels taquets.

Dans un premier type de réalisation conventionnelle, le taquet s'étend sensiblement suivant une direction principale et comprend :
- une saillie formant tourillon de montage dans un trou non traversant ou une réservation ménagée dans les montants ou les joues de l'étagère ;
- une partie extrême sur laquelle les tablettes d'étagères sont posées en appui simple.

Dans une réalisation antérieure particulière, le taquet est un tourillon cylindrique ou non. En variante, la partie extrême d'appui des tablettes comprend une face d'appui plane, et est par exemple en forme d'équerre.

Pour ce premier type de réalisation, on peut se reporter par exemple aux documents suivants : brevets américains délivrés sous les numéros 6 012 400, 3 826 207, 2 104 831, 1 829 009, 1 393 012, brevet anglais publié sous le numéro 705 983.

Ce premier type de taquet est de structure simple mais présente de nombreux inconvénients. En particulier, les tablettes étant en appui simple sur ces taquets, il existe un risque au démontage malveillant ou accidentel des tablettes, par soulèvement ou glissement. Pour limiter le risque de démontage par glissement, il a été proposé de réaliser des rainures dans les tablettes, rainures dans lesquelles viennent se loger les parties extrêmes d'appui des taquets. La réalisation de ces rainures présente des inconvénients importants. En particulier, la distance entre taquets devient imposée tout comme l'orientation des tablettes, sauf à réaliser plusieurs rainures sur les deux faces des tablettes, ce qui serait coûteux et nuirait à l'esthétique du rayonnage.

Dans un deuxième type de réalisation conventionnelle, le taquet est formé d'une bande de fil ou de métal plié.

Pour ce deuxième type de réalisation, on peut se référer, par exemple, aux documents suivants : brevets américains délivrés sous les numéros 1 984 473, 4 542 702, brevets anglais publiés sous les numéros 924 824, 923 345792 253, 954 943, demande de brevet en France publiée sous le numéro 2 539 284.

Dans un troisième type de réalisation conventionnelle, le taquet comprend une première partie de montage au travers d'un trou traversant ou d'une lumière d'un montant support, et une deuxième partie d'appui des tablettes d'étagères.

Pour ce troisième type de réalisation, on peut se référer, parmi les très nombreux documents de l'art antérieur, aux publications suivantes : brevets américains délivrés sous les numéros 4 744 612, 3 150 617, 2 905 425, brevet anglais publié sous le numéro 966 618, demande de brevet en France publiée sous le numéro 1 520 924

Les deuxième et troisième types de réalisation cités ci-dessus sont peu élégants et d'avèrent le plus souvent de montage assez fastidieux. Par ailleurs, ils n'assurent pas toujours une bonne sécurité au démontage des tablettes, par accident ou malveillance.

L'invention vise à fournir une nouvelle structure de taquet dépourvu des inconvénients de ceux connus dans l'art antérieur et qui soit tout à la fois facile à fabriquer, peu coûteux, difficile à démonter de manière malveillante, discret lorsqu'il est mis en place et de grande résistance mécanique, ce taquet pouvant être indifféremment employé pour des étagères d'entrepôts, magasins, ou de bureaux.

A ces fins, l'invention se rapporte, selon un premier aspect, à une étagère comprenant au moins un montant et un taquet support de tablette, le montant étant pourvu d'au moins un trou traversant, le taquet étant pourvu d'au moins deux gorges, chacune de ces gorges étant apte à venir en appui sur le bord des deux ouvertures opposées du trou traversant du montant, lorsque le taquet est en position montée.

Selon diverses réalisations, l'étagère présente les caractères suivants, éventuellement combinés :
- le montant est un profilé métallique, et notamment un profilé métallique creux;
- le montant est de section circulaire, ovale ou polygonale ;
- le taquet est de section circulaire ovale ou polygonale ;
- le taquet est réalisé en un matériau choisi parmi le groupe comprenant les aciers et alliages métalliques, les matériaux polymères, les matériaux polymères renforcés de fibres, les bois, ou tout autre matériau équivalent ;
- le taquet est réalisé en polyamide renforcé fibre de verre ;
- l'étagère comprend au moins deux tablettes disposées en appui, sur l'un des leurs angles, sur un seul et même taquet à gorges ;
- le taquet comprend au moins cinq gorges sensiblement équidistantes.

D'autres objets et avantages de l'invention apparaîtront au cours de la description suivante de modes de réalisation, description qui va être effectuée en se référant aux dessins annexés, dans lesquels :
- la figure 1 est une vue schématique du montage d'un taquet, pour un des angles d'une tablette ;
- la figure 2 est une vue schématique du montage d'un taquet pour deux angles de tablettes disposés côte à côte.

Sur les figures, afin de clarté, les taquets 1 apparaissent en traits continus.

Ainsi que le comprendra l'homme du métier, dans le mode de réalisation représenté, ces taquets ne sont toutefois pas visibles en position montée mais masqués par le chant 2 des tablettes 3 et la face avant 4 des montants 5.

Dans les modes de réalisation représentés, les montants 5 sont de section sensiblement carrée. Dans d'autres modes de réalisation, ces montants sont de section circulaire, ovale ou polygonale.

Les montants 5 sont formés de profilés creux, des trous traversant 6 étant aptes à permettre le passage des taquets 1 au travers de ces montants 5.

Ces montants peuvent être, de manière connue en soi, des longerons d'une échelle latérale d'étagère métallique ; des traverses, par exemple en fer plat, rigidifiant l'échelle.

Les taquets 1 s'étendent suivant une direction D1 et sont pourvus de gorges 7. Dans les réalisations représentées, cinq gorges 7 sont ménagées sur les taquets 1.

Ces gorges sont d'une largeur sensiblement égale ou légèrement supérieure à la somme des épaisseurs des parois de tablette 2 et de montant 5 qui se font face, parallèlement au plan référencé P.

Ainsi, lorsque les taquets sont en place, le poids des tablettes 3 conduit à l'appui d'une des gorges 7a dans un trou 6, et à l'appui d'une seconde gorge 7b dans le trou 6 en regard, la distance entre les gorges 7a et 7b étant sensiblement égale, aux jeux fonctionnels près, à la distance séparant ces deux trous 6.

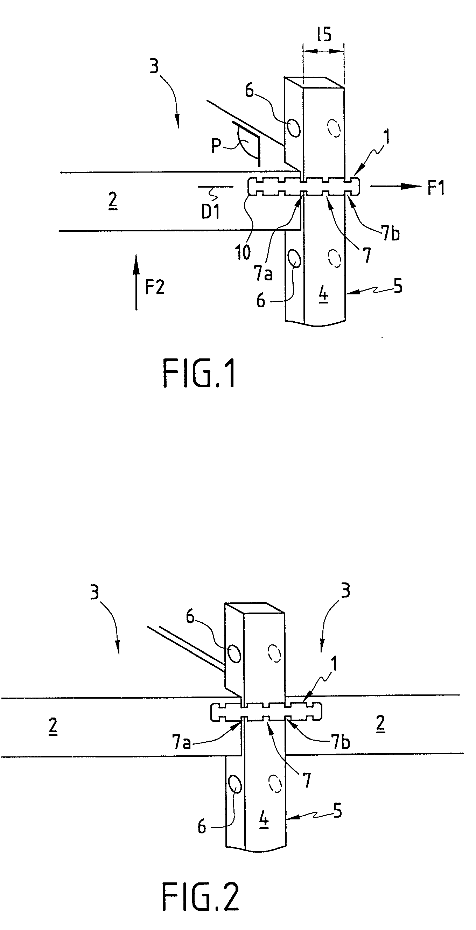

La symétrie de montage des taquets permet, ainsi qu'il est représenté en figure 2, d'employer un seul taquet pour deux angles de deux tablettes disposées en regard.

Pour déplacer le taquet de sa position en figure 1 vers celle de la figure 2, il suffit à l'opérateur d'exercer une traction, par exemple à l'aide d'une pince, selon la flèche F1, tout en soulevant la tablette selon la flèche F2 pour soulager le poids exercé par cette tablette sur le taquet 1.

Ce mode opératoire illustre la sécurité donnée au montage par l'emploi de taquets selon l'invention : une traction suivant la flèche F1 sans un soulèvement suivant F2 ne permettra pas le démontage, pas plus qu'un soulèvement suivant F2 sans traction suivant F1.

Cette sécurité pourra être encore renforcée par l'emploi d'un taquet pourvu d'une partie extrême tronconique, éventuellement déformable. Ainsi, lorsque la partie extrême référencée 10 en figure 1 est tronconique ou présente une sur-épaisseur, il faudra exercer un effort de traction important suivant F1 pour retirer complètement le taquet 1 au travers des trous 6 de plus petit diamètre.

Dans les modes de réalisation représentés, les montants 5 étant de section sensiblement carrée, la distance entre les trous 6 est ainsi donnée par la largeur 15 des montants.

Afin de permettre la réalisation de plusieurs montages différents, les taquets peuvent être pourvus de plusieurs jeux de gorges :
- de largeurs adaptées à plusieurs épaisseurs de paroi pour les tablettes 2 et/ou les montants 5 ;
- d'écartements adaptés à plusieurs sections de montants 5.

Afin d'éviter les concentrations de contrainte par effet d'entaille, pouvant donner lieu à des amorces de rupture par cisaillement, les gorges sont avantageusement à fond plat.

Les taquets 1 peuvent être de section ronde, ovale ou polygonale, les trous 6 étant d'ouverture correspondante.
Les taquets peuvent être élaborés en un matériau choisi parmi le groupe comprenant les aciers et alliages métalliques, les matériaux polymères éventuellement renforcés de fibres, les bois ou tout autre matériau analogue.

Les gorges 7, en fonction des matériaux utilisés, seront issues de moulage ou d'usinage.

Dans une réalisation particulière, les taquets sont en polyamide à renfort de fibre de verre, et sont issus de moulage.

## Revendications

1. Etagère comprenant au moins un montant (5) et un taquet (1) support de tablette, **caractérisé en ce que** le montant (5) est un profilé creux, de section carrée, circulaire, ovale ou polygonale et est pourvu d'au moins un trou traversant (6), le taquet (1) étant pourvu d'au moins deux gorges (7), chacune de ces gorges (7) étant apte à venir en appui sur le bord des deux ouvertures opposées du trou traversant (6) du montant (5), lorsque le taquet (1) est en position montée.

2. Etagère selon la revendication 1, **caractérisée en ce que** le taquet (1) est de section circulaire ovale ou polygonale.

3. Etagère selon l'une quelconque des revendications 1 ou 2, **caractérisé en ce que** le taquet (1) est réalisé en un matériau choisi parmi le groupe comprenant les aciers et alliages métalliques, les matériaux polymères, les matériaux polymères renforcés de fibres, les bois, ou tout autre matériau équivalent.

4. Etagère selon la revendication 3, **caractérisé en ce que** le taquet (1) est réalisé en polyamide renforcé fibre de verre.

5. Etagère selon l'une quelconque des revendications 1 à 4, **caractérisé en ce qu'**elle comprend au moins deux tablettes disposées en appui, sur l'un des leurs angles, sur un seul et même taquet (1) à gorges.

6. Etagère selon l'une quelconque des revendications 1 à 5, **caractérisé en ce que** le taquet (1) comprend au moins cinq gorges (7) sensiblement équidistantes.
